(19)

**Europäisches Patentamt**

**European Patent Office**

**Office européen des brevets**

(11) **EP 4 239 590 B1**

(12) **EUROPEAN PATENT SPECIFICATION**

(45) Date of publication and mention of the grant of the patent:
**13.11.2024 Bulletin 2024/46**

(21) Application number: **23154518.7**

(22) Date of filing: **01.02.2023**

(51) International Patent Classification (IPC):
*G06V 10/82* (2022.01)   *G06V 10/77* (2022.01)

(52) Cooperative Patent Classification (CPC):
**G06V 10/82; G06V 10/77**

(54) **METHOD FOR PERFORMING IMAGE OR VIDEO RECOGNITION USING MACHINE LEARNING**

VERFAHREN ZUR DURCHFÜHRUNG VON BILD- ODER VIDEOERKENNUNG UNTER VERWENDUNG VON MASCHINENLERNEN

PROCÉDÉ DE RÉALISATION D'UNE RECONNAISSANCE D'IMAGE OU DE VIDÉO À L'AIDE D'UN APPRENTISSAGE AUTOMATIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.03.2022   GR 20220100214**

(43) Date of publication of application:
**06.09.2023   Bulletin 2023/36**

(73) Proprietor: **Samsung Electronics Co., Ltd. Gyeonggi-do 16677 (KR)**

(72) Inventors:
 • **BULAT, Adrian**
  **Chertsey, KT16 0RS (GB)**
 • **ALONSO, Brais Martinez**
  **Chertsey, KT16 0RS (GB)**
 • **TZIMIROPOULOS, Georgios**
  **Chertsey, KT16 0RS (GB)**

(74) Representative: **Appleyard Lees IP LLP**
 **15 Clare Road**
 **Halifax HX1 2HY (GB)**

(56) References cited:
 • **GUANGTING WANG ET AL: "When Shift Operation Meets Vision Transformer: An Extremely Simple Alternative to Attention Mechanism", ARXIV.ORG, CORNELL UNIVERSITY LIBRARY, 201 OLIN LIBRARY CORNELL UNIVERSITY ITHACA, NY 14853, 26 January 2022 (2022-01-26), XP091139900**
 • **TAN YU ET AL: "S^2-MLPv2: Improved Spatial-Shift MLP Architecture for Vision", ARXIV.ORG, CORNELL UNIVERSITY LIBRARY, 201 OLIN LIBRARY CORNELL UNIVERSITY ITHACA, NY 14853, 2 August 2021 (2021-08-02), XP091029781**
 • **LIN JI ET AL: "TSM: Temporal Shift Module for Efficient Video Understanding", 2019 IEEE/CVF INTERNATIONAL CONFERENCE ON COMPUTER VISION (ICCV), IEEE, 27 October 2019 (2019-10-27), pages 7082 - 7092, XP033723286, DOI: 10.1109/ICCV.2019.00718**
 • **WU BICHEN ET AL: "Shift: A Zero FLOP, Zero Parameter Alternative to Spatial Convolutions", 2018 IEEE/CVF CONFERENCE ON COMPUTER VISION AND PATTERN RECOGNITION, IEEE, 18 June 2018 (2018-06-18), pages 9127 - 9135, XP033473838, DOI: 10.1109/CVPR.2018.00951**
 • **HUGO TOUVRON ET AL: "ResMLP: Feedforward networks for image classification with data-efficient training", ARXIV.ORG, CORNELL UNIVERSITY LIBRARY, 201 OLIN LIBRARY CORNELL UNIVERSITY ITHACA, NY 14853, 10 June 2021 (2021-06-10), XP081981128**

EP 4 239 590 B1

**Description**

**Field**

The present application generally relates to a method for efficient image or video recognition. In particular, the present application relates to a computer-implemented method for analysing images or videos using a machine learning, ML, model and recognising actions within the image or video.

**Background**

Video recognition is the problem of recognizing specific events of interest (e.g. actions or highlights) in video sequences. Compared to the image recognition problem, video recognition must address at least one additional important technical challenge: the incorporation of the time dimension induces significant computational overheads as, typically, in the best case, a temporal model has $T \times$ more complexity than its corresponding image counterpart (T is the number of frames in the video sequence. For example, existing state-of-the-art models still require 400-1000 GFLOPs to achieve high accuracy on the Kinetics dataset.

Following the tremendous success of transformers in natural language processing, NLP, the current state-of-the-art in video recognition is based on video transformers. While such models have achieved significantly higher accuracy compared to traditional CNN-based approaches (e.g. SlowFast, TSM), they still require very large video backbones to achieve these results. In fact, the main reason that these models have dominated the accuracy-FLOPs spectrum is because they require significantly fewer test-time crops compared to CNN-based approaches.

Concurrently to the development of the aforementioned video transformers, there has been an independent line of research which questions the necessity of the self-attention layers in the vision transformer's architecture. Such "attention-free" methods have proposed the use of simpler schemes based on multilayer perceptrons, MLPs, and/or the shift operator for achieving the token mixing effect akin to the self-attention layer. However, these methods have been developed for the image domain where the cost of the self-attention is relatively low compared to the complexity induced by the MLPs within the vision transformer. As a result these methods have not been conclusively shown to outperform self-attention-based transformers for image recognition. However, there are no attention-free methods yet for the case of the video domain where the self-attention operation induces significantly more impactful computational and memory cost. Moreover, shift-based methods have been developed for the image domain where the cost of the self-attention is relatively low compared to the video domain.

Background information can be found in: Guangting Wang et al ("When Shift Operation Meets Vision Transformer: An Extremely Simple Alternative to Attention Mechanism", ARXIV.ORG, CORNELL UNIVERSITY LIBRARY, 201 OLIN LIBRARY CORNELL UNIVERSITY ITHACA, NY 14853, 26 January 2022 (2022-01-26)); Tan Yu et al ("S2-MLPv2: Improved Spatial-Shift MLP Architecture for Vision", ARXIV.ORG, CORNELL UNIVERSITY LIBRARY, 201 OLIN LIBRARY CORNELL UNIVERSITY ITHACA, NY 14853, 2 August 2021 (2021-08-02)); Lin Ji et al ("TSM: Temporal Shift Module for Efficient Video Understanding", 2019 IEEE/CVF INTERNATIONAL CONFERENCE ON COMPUTER VISION (ICCV), IEEE, 27 October 2019 (2019-10-27), pages 7082-7092); and Wu Bichen et al ("Shift: A Zero FLOP, Zero Parameter Alternative to Spatial Convolutions", 2018 IEEE/CVF CONFERENCE ON COMPUTER VISION AND PATTERN RECOGNITION, IEEE, 18 June 2018 (2018-06-18), pages 9127-9135).

Therefore, the present applicant has recognised the need for improvements in the efficiency of machine learning models for performing image or video recognition.

**Summary**

In a first approach of the present techniques, there is provided a computer-implemented method for performing image or video recognition using a transformer-based machine learning, ML, model, the method comprising: receiving an image depicting at least one feature to be identified, the image comprising a plurality of channels; dividing the received image into a plurality of patches; mixing the channels using a projection of the plurality of patches; shifting a predefined number of channels between patches to generate shifted patches; computing, using the shifted patches, a channel-wise rescaling value and a channel-wise bias value; applying the computed rescaling and bias values to the channels of the shifted patches; and inputting the shifted patches, after applying the rescaling and bias values to the channels and further mixing of the channels using a projection of the shifted patches, into a classifier module of the ML model.

Image or video recognition means recognising actors, objects, actions, sequences of interest, and so on within an image or video.

Advantageously, the present techniques provide a ML model which is of a size suitable for implementation on constrained resource devices, such as smartphones. Furthermore, the present techniques provide a ML model which is more computationally efficient (from a processor and memory perspective), without any loss in accuracy.

The present techniques achieve these benefits by providing a ML model which is able to perform image or video recognition without needing to use the attention mechanism, which has high computational and memory requirements. The ML model of the present techniques replaces the attention mechanism of many existing Transformers with another mechanism that closely approximates the operations of the attention mechanism. This new mechanism involves performing token mixing and channel-wise rescaling and bias application. The new mechanism is explained in more detail below with respect to the Figures.

The approximation mechanism may comprise two separate modules to approximate the operations of the attention mechanism. One such module may be used for computing the channel-wise rescaling value. Computing the channel-wise rescaling value may comprise using a multilayer perceptron module of the ML model. Another such module may be used for computing the channel-wise bias value. Computing the channel-wise bias value may comprise using a depthwise convolution module of the ML model.

The present techniques may be used to analyse images or videos. Thus, in some cases, the received image may be a single image (e.g. a photograph or a single frame of a video). In such cases, shifting a predefined number of channels between patches of the image may comprise shifting a predefined number of channels across a first dimension and a second dimension. The first dimension may be in the width direction of the image and the second dimension may be in the height direction of the image (or vice versa). The shifting may comprise shifting a predefined number of channels between adjacent patches of the image. The shifting is preferably in both directions. That is, for three patches n-1, n and n+1, some channels from patch n-1 may be shifted to patch n, and some channels from patch n may be shifted to n-1. Similarly, some channels from patch n+1 may be shifted to patch n, and some channels from patch n may be shifted to patch n-1.

In some cases, the received image may be a video comprising a plurality of frames. In such cases, shifting a predefined number of channels between patches of the image may comprise shifting a predefined number of channels across a first dimension, a second dimension and a third dimension. The first dimension may be in the width direction of the image, the second dimension may be in the height direction of the image, and the third dimension may be in the time dimension (i.e. to another frame). That is, for three frames t-1, t and t+1, some channels in each frame may be shifted in the width direction and heigh direction within the frame (in the same way as for the single image example). In addition, for the shifting in the third dimension, some channels from frame t-1 may be shifted to frame t and some channels from frame t may be shifted to frame t-1, and some channels from frame t+1 may be shifted to frame t, and some channels from frame t may be shifted to frame t-1. The shifting may be applied uniformly in each of the first, second and third dimensions.

For each frame of the plurality of frames, the shifting may comprise shifting a predefined number of channels across the first dimension and the second dimension between patches in the frame, and shifting a predefined number of channels across the third dimension between patches of adjacent frames.

In this way, for both single images and videos, channels are swapped or shifted between patches. This shifting achieves token mixing. This is advantageous because the token mixing avoids the need to perform complex matrix multiplications (which are required by the attention mechanism), and therefore, the computational complexity of the ML model of the present techniques is reduced relative to attention-based Transformer models.

In some cases, shifting a predefined number of channels between patches may comprise shifting a predefined number of channels between non-adjacent patches (e.g. between patches n-2, n and n+2).

Alternatively, shifting a predefined number of channels between patches may comprise shifting a predefined number of channels between adjacent patches.

Inputting the shifted patches into a classifier module may comprise: aggregating feature predictions from each shifted patch of the received image to obtain an aggregated feature prediction; and inputting the aggregated feature prediction into the classifier.

Shifting a predefined number may comprise shifting up to half of a total number of channels for each patch. For example, the predefined number may be a quarter of a total number of channels for each patch. That is 25% of the channels from one patch may be shifted to another patch (in the same image or to another frame). In this example, one patch n may comprise 50% of the channels of patch n and 25% from patch n-1 and 25% from patch n+1, for instance. In another example, the predefined number may be half of the channels for each patch.

In a second approach of the present techniques, there is provided an apparatus for performing image or video recognition using a transformer-based machine learning, ML, model, the apparatus comprising: at least one processor coupled to memory and arranged for: receiving an image depicting at least one feature to be identified, the image comprising a plurality of channels; dividing the received image into a plurality of patches; mixing the channels using a projection of the plurality of patches; shifting a predefined number of channels between patches to generate shifted patches; computing, using the shifted patches, a channel-wise rescaling value and a channel-wise bias value; applying the computed rescaling and bias values to the channels of the shifted patches; and inputting the shifted patches, after applying the rescaling and bias values to the channels and further mixing of the channels using a projection of the shifted patches, into a classifier module of the ML model.

The features described above in relation to the first approach may apply equally to the second approach and therefore, for the sake of conciseness, are not repeated.

The apparatus may be, for example, a constrained-resource device, but which has the minimum hardware capabilities to use a trained neural network/ML model. The apparatus may be: a smartphone, tablet, laptop, computer or computing device, virtual assistant device, a vehicle, a drone, an autonomous vehicle, a robot or robotic device, a robotic assistant, image capture system or device, an augmented reality system or device, a virtual reality system or device, a gaming system, an Internet of Things device, a smart consumer device, a smartwatch, a fitness tracker, and a wearable device. It will be understood that this is a non-exhaustive and non-limiting list of example apparatus.

The apparatus may comprise at least one image capture device configured to capture an image or video comprising a plurality of frames. The image capture device may be a camera. Additionally or alternatively the apparatus may comprise at least one interface for receiving an image or video for analysis.

The apparatus may further comprise: analysing, using the at least one processor, the received image or video in real-time using the feature identification process. Thus, advantageously, the present techniques can be used on resource-constrained devices, and can also be used in real-time to analyse videos being captured by the at least one image capture device in real- or near real-time.

Real-time analysis may be useful for a number of reasons. For example the at least one processor may be used to: identify, using a result of the classifier module, one or more actions or gestures in the received video/image; and/or identify, using a result of the classifier module, one or more objects in the received video/image. Gesture or action recognition may be useful because it may enable a user to control the image capture process using actions.

It may also enable a capture mode of the image capture device to be adjusted based on what objects or actions or gestures are identified in the video. For example, when the image/video recognition process determines that the image/video features a sport being played or other fast-moving action, then it may be useful for the capturing mode to change (to, for example, a more suitable number of frames per second, or to slow motion mode, or at a very high resolution) so that the action can be better recorded. Thus, the at least one processor may be used to: control a capture mode of the at least one image capture device in response to the result of the classifier module.

In another example, the received video may comprise a user performing at least one action, such as cooking or exercise. The at least one processor may be arranged to: provide feedback to the user, via a user interface, based on the at least one action performed by the user. This may enable an AI instructor or AI assistant to understand what the user is doing in real-time and provide suitable information to the user. For example, the AI instructor/assistant may provide assistance or guidance to the user if the user does not appear to be performing an exercise correctly, or may provide motivational information to the user to encourage them to continue performing the exercise. The user's emotional state may be determined using the video recognition process and this may enable the AI instructor to react to the user's emotional state. For example, if the user is struggling with an exercise routine, the AI instructor may output motivational information or may encourage the user to take a short break.

The video recognition process may also function on pre-recorded videos. Thus, the apparatus may further comprise: storage storing at least one video; and at least one interface for receiving a user query. The at least one processor may be arranged to: receive, via the at least one interface, a user query requesting any video from the storage that contains a specific feature; use the image/video recognition process to identify any video containing the specific feature; and output each video containing the specific feature to the user via the at least one interface. For example, the user query may be "Hey Bixby, find videos on my gallery where my dog is jumping". The image/video recognition process be used to identify any video in the storage that shows the user's dog jumping, and then these videos may be output to the user. The user may speak or type their query, and the output may be displayed on a display screen of the apparatus or a response may be output via a speaker (e.g. "We have found two videos of your dog jumping").

In this example, the at least one processor may be arranged to store, with each video containing the specific feature: the class corresponding to the specific feature, and information indicating when the class appears in the video. Thus, the identified videos may be labelled with the class such that the videos can be output in the future without needing to the image/video recognition process again (for the same feature(s)).

The at least one processor may output a whole video containing the specific feature or a segment of the video containing the specific feature, wherein the segment includes the specific feature. That is, the whole video may be output where the specific feature is located somewhere in the video, or a highlight segment may be output which shows the specific feature itself. The highlight segment is advantageous when the whole video is more than a few minutes long. For example, the whole video may be of the user's child playing a football game, but the user may only want to see the part in the video where the user's child scores a goal. The whole video may be over an hour long, so the highlight segment is useful as it means the user does not have to watch or skip through the video to find the moment when the user's child scores a goal.

In a related approach of the present techniques, there is provided a computer-readable storage medium comprising instructions which, when executed by a processor, causes the processor to carry out any of the methods described herein.

As will be appreciated by one skilled in the art, the present techniques may be embodied as a system, method or computer program product. Accordingly, present techniques may take the form of an entirely hardware embodiment, an entirely software embodiment, or an embodiment combining software and hardware aspects.

Furthermore, the present techniques may take the form of a computer program product embodied in a computer readable medium having computer readable program code embodied thereon. The computer readable medium may be a computer readable signal medium or a computer readable storage medium. A computer readable medium may be, for example, but is not limited to, an electronic, magnetic, optical, electromagnetic, infrared, or semiconductor system, apparatus, or device, or any suitable combination of the foregoing.

Computer program code for carrying out operations of the present techniques may be written in any combination of one or more programming languages, including object oriented programming languages and conventional procedural programming languages. Code components may be embodied as procedures, methods or the like, and may comprise subcomponents which may take the form of instructions or sequences of instructions at any of the levels of abstraction, from the direct machine instructions of a native instruction set to high-level compiled or interpreted language constructs.

Embodiments of the present techniques also provide a non-transitory data carrier carrying code which, when implemented on a processor, causes the processor to carry out any of the methods described herein.

The techniques further provide processor control code to implement the above-described methods, for example on a general purpose computer system or on a digital signal processor (DSP). The techniques also provide a carrier carrying processor control code to, when running, implement any of the above methods, in particular on a non-transitory data carrier. The code may be provided on a carrier such as a disk, a microprocessor, CD- or DVD-ROM, programmed memory such as non-volatile memory (e.g. Flash) or read-only memory (firmware), or on a data carrier such as an optical or electrical signal carrier. Code (and/or data) to implement embodiments of the techniques described herein may comprise source, object or executable code in a conventional programming language (interpreted or compiled) such as Python, C, or assembly code, code for setting up or controlling an ASIC (Application Specific Integrated Circuit) or FPGA (Field Programmable Gate Array), or code for a hardware description language such as Verilog (RTM) or VHDL (Very high speed integrated circuit Hardware Description Language). As the skilled person will appreciate, such code and/or data may be distributed between a plurality of coupled components in communication with one another. The techniques may comprise a controller which includes a microprocessor, working memory and program memory coupled to one or more of the components of the system.

It will also be clear to one of skill in the art that all or part of a logical method according to embodiments of the present techniques may suitably be embodied in a logic apparatus comprising logic elements to perform the steps of the above-described methods, and that such logic elements may comprise components such as logic gates in, for example a programmable logic array or application-specific integrated circuit. Such a logic arrangement may further be embodied in enabling elements for temporarily or permanently establishing logic structures in such an array or circuit using, for example, a virtual hardware descriptor language, which may be stored and transmitted using fixed or transmittable carrier media.

In an embodiment, the present techniques may be realised in the form of a data carrier having functional data thereon, said functional data comprising functional computer data structures to, when loaded into a computer system or network and operated upon thereby, enable said computer system to perform all the steps of the above-described method.

The methods described above may be wholly or partly performed on an apparatus, i.e. an electronic device, using a machine learning or artificial intelligence model. The model may be processed by an artificial intelligence-dedicated processor designed in a hardware structure specified for artificial intelligence model processing. The artificial intelligence model may be obtained by training. Here, "obtained by training" means that a predefined operation rule or artificial intelligence model configured to perform a desired feature (or purpose) is obtained by training a basic artificial intelligence model with multiple pieces of training data by a training algorithm. The artificial intelligence model may include a plurality of neural network layers. Each of the plurality of neural network layers includes a plurality of weight values and performs neural network computation by computation between a result of computation by a previous layer and the plurality of weight values.

As mentioned above, the present techniques may be implemented using an AI model. A function associated with AI may be performed through the non-volatile memory, the volatile memory, and the processor. The processor may include one or a plurality of processors. At this time, one or a plurality of processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). The one or a plurality of processors control the processing of the input data in accordance with a predefined operating rule or artificial intelligence (AI) model stored in the non-volatile memory and the volatile memory. The predefined operating rule or artificial intelligence model is provided through training or learning. Here, being provided through learning means that, by applying a learning algorithm to a plurality of learning data, a predefined operating rule or AI model of a desired characteristic is made. The learning may be performed in a device itself in which AI according to an embodiment is performed, and/or may be implemented through a separate server/system.

The learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

**Brief description of drawings**

Implementations of the present techniques will now be described, by way of example only, with reference to the accompanying drawings, in which:

Figure 1 is a schematic diagram illustrating the ML model of the present techniques (right-hand side) alongside an existing model (left-hand side);

Figure 2 shows a table of the effect of various shift-based variants of the present techniques;

Figure 3 shows a table of experimental results;

Figure 4 shows a flowchart of example steps for performing image or video recognition using the ML model of the present techniques;

Figure 5 is a schematic diagram of an apparatus for performing image or video recognition;

Figure 6 shows a table of experimental results;

Figure 7 shows an example use of the present techniques to query a video gallery; and

Figure 8 shows an example use of using the present techniques to analyse a video in real-time.

**Detailed description of drawings**

Broadly speaking, the present techniques generally relate to a computer-implemented method for analysing images or videos using a machine learning, ML, model and recognising actions within the image or video. Advantageously, the present techniques provide a transformer ML model which is of a size suitable for implementation on constrained resource devices, such as smartphones. Furthermore, the present techniques provide a transformer ML model which is more computationally efficient (from a processor and memory perspective), without any loss in accuracy.

In view of the above-described problems, the present techniques provide a highly-accurate attention-free shift-based transformer, and show its application to efficient video recognition.

Most attention-free shift-based transformer approaches propose to replace the token mixing operation of spatial attention with channel shifting. However, the self-attention operation does not only mix tokens, but also re-scales them. Thus, self-attention cannot be well approximated just with shift operations. The key idea here for developing a highly-accurate shift-based transformer is based on the above observation. Specifically, the present techniques make at least the following contributions:

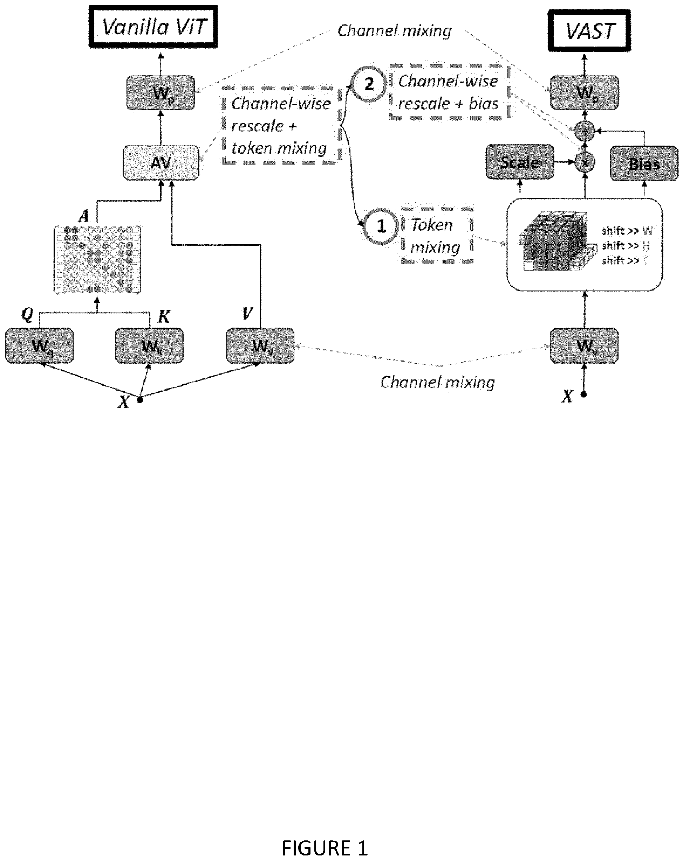

1. A new block for attention-free transformers based on the *shift operator*, coined *Affine-Shift*, which is tailored to achieving high accuracy with low computational and memory footprint. This block, shown on the right-hand side in Figure 1, is specifically designed to *approximate* as closely as possible *both* operations in the self-attention layer of a transformer, namely the channel-wise rescaling and the token mixing.

2. Based on the Affine-Shift block, an Affine-Shift Transformer (AST) is constructed. AST is exhaustively ablated in the image domain for ImageNet classification and it is shown that AST significantly outperforms previous attention-free methods, particularly for the case of low complexity models.

3. A new backbone for video recognition is built, the proposed Video Affine-Shift Transformer (VAST), by extending the Affine-Shift block in the video domain. VAST has two main features: (a) it is attention-free, and (b) it is shift-based, effectively applying, for the first time, a shift-based block in *both space & time* to achieve token mixing.

4. VAST is evaluated on multiple action recognition datasets, and it is shown that VAST can match or even surpass state of the art video recognition models on the most widely used video recognition benchmarks.

Prior to describing the present techniques in detail, some existing techniques are discussed.

**Vision Transformers:** After revolutionizing natural language processing, ViT (Alexey Dosovitskiy, Lucas Beyer, Alexander Kolesnikov, DirkWeissenborn, Xiaohua Zhai, Thomas Unterthiner, Mostafa Dehghani, Matthias Minderer, Georg Heigold, Sylvain Gelly, et al. An image is worth 16x16 words: Transformers for image recognition at scale. arXiv preprint arXiv:2010.11929, 2020.) was the first convolution-free transformer to shown promising results on ImageNet.

**Attention-free Transformers:** Very recently, the necessity of the self-attention operation within ViT has been questioned, with MLPs being proposed for spatial token mixing instead. Subsequent works further use the shift operator and related variants for spatial token mixing, giving rise to methods which are more efficient.

However, prior work focuses on approximating the token mixing, while ignoring the dynamic token rescaling mechanism within self-attention. To remedy this, the present techniques firstly propose the Affine-Shift Transformer (AST), which 1) accomplishes *both* the token-mixing and the input-conditioned rescaling simultaneously and 2) preserves the very efficient nature of shift-based methods. As described in more detail below, it is shown that AST already outperforms all other shift-based attention-free alternatives in the image domain, thereby showing the importance of AST.

**Video transformers:** A number of works have proposed extensions of ViT into the video domain. The main goal of these works has been primarily to reduce the cost of the full space-time attention, which is particularly memory and computationally costly, by using spatio-temporal factorization, low resolution self-attention and hierarchical pyramid architecture, restricting the self-attention computation to local windows, or a local approximation of time attention.

While performing well, video transformers are typically compute-heavy. They still rely on the full spatial attention and at least some approximation of the temporal attention. It is noted here that, while several efficient attention-free shift-based methods have been proposed on the image domain, no conclusive results exist for video recognition, where the computational issues derived from the self-attention are compounded. Thus, the present techniques extend the AST module to build the Video Affine-Shift Transformer (VAST), the very first attention-free video transformer which matches or surpasses attention-based video transformers.

**Shift in video recognition:** The shift operator was first introduced to approximate convolutions by shifting channels across spatial dimensions. It was widely popularized however for action recognition, with channel shifting across time approximating temporal convolutions in a (2+1)D type of architecture. Subsequently, (learned) spatio-temporal shifts were used as an approximation of 3D convolutions in a 3D architecture. In the transformer context, a shift-based approximation of the temporal attention component has been proposed within a divided space-time attention block, while temporal shifts have also been interleaved to turn a spatial transformer into a video one. However, in this case, the shifts do not replace any costly operation within a known architecture.

Compared to these existing methods, the present technique has the advantages of acting as an approximation of the self-attention, and replacing the spatio-temporal self-attention (not only the temporal one). Importantly, as shown below, replicating the token-mixing and token re-scaling capabilities of the self-attention is crucial. Instead, just adding shift operators in a naive way, e.g. substituting the self-attention or directly using a TSM-like design, clearly underperforms.

The present techniques are now described mathematically.

**ViT block:** The basic building block of the ViT (Ashish Vaswani, Noam Shazeer, Niki Parmar, Jakob Uszkoreit, Llion Jones, Aidan N Gomez, Lukasz Kaiser, and Illia Polosukhin. Attention is all you need. arXiv preprint arXiv:1706.03762, 2017.) consists of a Multi-Head Self-Attention (MHSA) layer followed by an MLP (with skip connections around them). For the *l*-th transformer layer, they take the form:

$$\mathbf{Y}^l = MHSA(LN(\mathbf{X}^{l-1})) + \mathbf{X}^{l-1}, \qquad\qquad (1)$$

$$\mathbf{X}^l = MLP(LN(\mathbf{Y}^l)) + \mathbf{Y}^l, \qquad\qquad (2)$$

where $\mathbf{X}^{l-1} \in \mathcal{R}^{S \times d}$ are the input features at layer *l*, $LN(.)$ is the Layer Norm [?] and the Self-Attention for a single head is given by:

$$\mathbf{y}^l_{s,t} = \sum_{s'=0}^{S-1} \sigma\left(\frac{\mathbf{q}^l_s \cdot \mathbf{k}^l_{s'}}{\sqrt{d_h}}\right)\mathbf{v}^l_{s'}, \quad s = 0, ..., S-1, \qquad\qquad (3)$$

where $\sigma(.)$ is the softmax function, $S$ is the total number of spatial locations, and $\mathbf{q}^l_s, \mathbf{k}^l_s, \mathbf{v}^l_s \in \mathbb{R}^{d_h}$ are the query, key, and value vectors computed from the input features using projections $\mathbf{W_q}, \mathbf{W_k}, \mathbf{W_v} \in \mathbb{R}^{d \times d_h}$. The final output is obtained by concatenating and projecting the heads using $\mathbf{W_h} \in \mathbb{R}^{d \times d} \ (d = hd_h)$.

There is growing evidence that the success of the ViT can be equally attributed to both the ViT's block structure and the MHSA module. Therefore, the proposed Affine-Shift block, described in this section, is derived from the perspective that any approximations that aim at increasing the model's efficiency, should result in networks that (a) preserve the overall structure of the block while (b) offering suitable in-place replacement for the computationally demanding operations without significantly altering their behavior.

The starting point for the formulation is to approximate the spatial (and then also the temporal) component of the self-attention using local attention. For simplicity, the local window is considered to be square-shaped (or a cube in 3D), noting that different values could be chosen should the data characteristics require so. For a given spatial window $[-s_w, s_w]$ in both spatial dimensions $s_x, s_y$, the local attention can be expressed as:

$$\mathbf{y}^l_{s_x,s_y} = \sum_{s_{x\prime}=s_x-s_w}^{s_x+s_w} \sum_{s_{y\prime}=s_y-s_w}^{s_y+s_w} \sigma\Big(\frac{\mathbf{q}^l_{s_x,s_y} \cdot \mathbf{k}^l_{s_{x\prime},s_{y\prime}}}{\sqrt{d_h}}\Big) \mathbf{v}^l_{s_{x\prime},s_{y\prime}},$$

$$= \sum_{s_{x\prime}=s_x-s_w}^{s_x+s_w} \sum_{s_{y\prime}=s_y-s_w}^{s_y+s_w} a^l_{s_{x\prime},s_{y\prime}} \mathbf{v}^l_{s_{x\prime},s_{y\prime}}, \tag{4}$$

where $a^l_{s_{x\prime},s_{y\prime}}$ are the attention coefficients. Eq. 4 shows that the output of the local attention is a combination of the values in the local window.

The mixing of values in the window can be approximated with the shift operator. Let $\mathbf{U} \in \{0,1\}^{d_i \times d_i}$ be a binary matrix with ones on the super-diagonal and zeros everywhere else. Multiplying a matrix from the left (right) with $\mathbf{U}$ will shift the matrix up (down) by one position. Multiplying a matrix from the left (right) with $\mathbf{U}^T$ will shift the matrix left (right) by one position. We denote with $\mathbf{U}^p$ and $(\mathbf{U}^p)^T$ the $p$-position shifting matrix. In order to mix the channels across each dimension, we can define 2 shift matrices, $\mathbf{U}^p_x, \mathbf{U}^p_y$. Given input $\mathbf{X}$, the $p$-shift operator over axis dimension i is defined as:

$$Shift_i(\mathbf{X}, p) = \mathbf{U}^p_i rs(\mathbf{X}, i, d_i)(\mathbf{U}^p_i)^T, \tag{5}$$

where $rs(.)$ is the reshape and slice operator that applies $\mathbf{U}^p_i$ only to $d_i$ channels. Note that in practice we implement the shift operator using efficient memcopy operations. Finally, the MSHA operation can be replaced with the Shift Attention Mixer (SAM):

$$SAM(\mathbf{X}, p, \{i_x, i_y\}) = (Shift_{i_x} \circ Shift_{i_y})(\mathbf{X}, p) \tag{6}$$

Observe that in the above formulation there is no attention and hence there is no need to compute queries and values. However the projection matrix $W_v$ is kept to compute the values V' from input features $\mathbf{X}^{l-1}$, , $\mathbf{V}^l = LN(\mathbf{X}^{l-1})\mathbf{W_v}$. Following this, $\mathbf{Y}^l$ is given by:

$$\mathbf{Z}^l = SAM(\mathbf{V}^l, p, \{i_x, i_y\}),$$

$$\mathbf{Y}^l = \mathbf{Z}^l \mathbf{W}_h + \mathbf{X}^{l-1}. \tag{7}$$

while $\mathbf{X}^l$ is computed following Eq. 2.

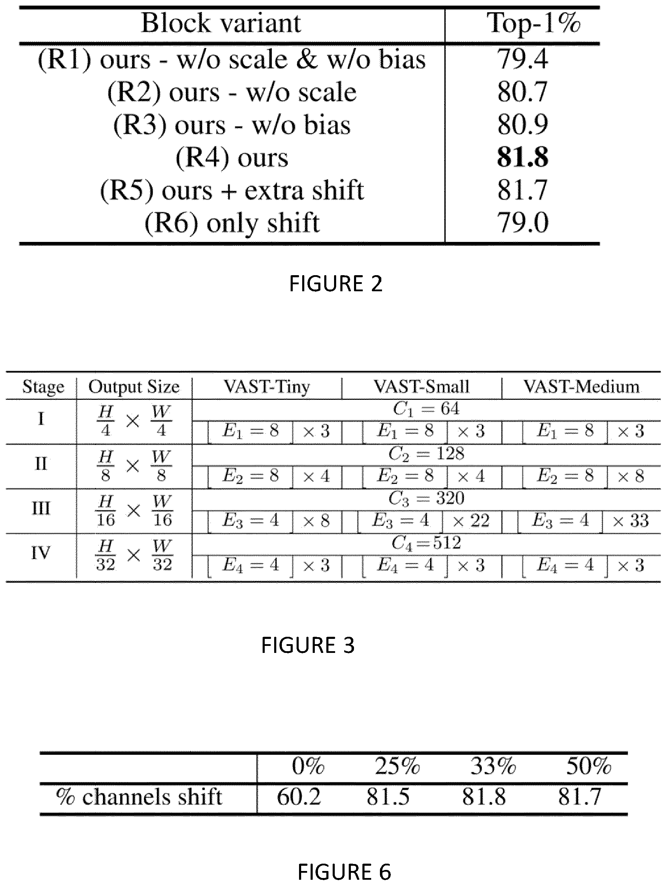

**Shift alone does not suffice:** Figure 2 shows a table of the effect of various shift-based variants of the present techniques, in terms of Top-1 accuracy (%) on ImageNet. Although the above works, as Figure 2 shows, it is **not sufficient** to obtain high accuracy. While the shift operator mixes information across adjacent tokens, the signal is simply mixed but there is no scale or bias adjustment. However, as Eq. 3 shows, in self-attention, the value vectors $\mathbf{v}^l_{s_{x\prime},s_{y\prime}}$ are scaled by the attention coefficients $a^l_{s_{x\prime},s_{y\prime}}$. Moreover, each channel in the output vector $\mathbf{y}^l_s$ is a linear combination of the corresponding channel of the value vectors, suggesting a channel-wise operation.

None of these operations appear so far in the formulation, suggesting that an extra (channel-wise) operation is missing. To address this, the Affine-Shift operator is introduced, which uses a small MLP to compute a channel-wise rescaling and a DWConv (depthwise convolution) to compute a channel-wise bias. Notably, the scale factor and bias are computed from the data in a dynamic manner (similar to the dynamic nature of the self-attention layer). Moreover, both the MLP and the DWConv take as input the signal *post-shifting* (as also expected from the self-attention layer). Overall, the **proposed Affine-Shift** operation is defined as:

$$\mathbf{Z}^l = SAM(\mathbf{V}^l, p, [i_x, i_y]), \tag{8}$$

$$\hat{\mathbf{Z}}^l = \mathbf{Z}^l \odot \sigma(MLP(AVG(\mathbf{Z}^l))) + DWConv(\mathbf{Z}^l), \tag{9}$$

$$\mathbf{Y}^l = \hat{\mathbf{Z}}^l \mathbf{W_h} + \mathbf{X}^{l-1}, \tag{10}$$

where $\odot$ is the Hadamard product, AVG denotes global average pooling and $\sigma$ is the *Sigmoid* function. Note that both the MLP and the $3 \times 3$ DWConv layer introduce minimal computational overhead. Finally, note that a final linear layer using $\mathbf{W_h}$ is applied as in the original ViT block.

Putting everything together, the proposed approximation to the local attention firstly applies $\mathbf{W_v}$ to obtain the values by mixing the channels, then the Affine-Shift block to mix tokens and rescale & add bias channel-wise, and finally another projection $\mathbf{W_h}$ to mix again the channels. Figure 1 is a schematic diagram illustrating the ML model of the present techniques (right-hand side) alongside an existing model (left-hand side). The existing ViT attention module is shown on the left-hand side. The present techniques (right-hand side) aim to approximate as closely as possible the MHSA operations within a Transformer block. As explained above, the channel-wise rescaling and toxen mixing implemented by the AV on the left-hand side are replaced, in the present techniques, by local token mixing using the shift operator followed by channel-wise rescaling and bias correction. The Affine-shift block is shown on the right-hand side in Figure 1. Note that *all the above mentioned steps* are needed to obtain a highly accurate block/architecture.

**Video Affine Shift.** For video data, information needs to be mixed across one extra dimension (time). To accommodate this, the shift operator, described in Equation 8, can be naturally extended as follows:

$$\mathbf{Z}^l = SAM(\mathbf{V}^l, p, [i_t, i_x, i_y]), \tag{11}$$

Effectively, instead of shifting across the last two dimensions (height and width), shifting is performed across all three: time, height, width. Note than unless otherwise specified, the shift is applied uniformly in each of the 3 direction. In one example, 1/6 channels are selected for each direction, for a total of 1/2 channels. Both the MLP and 2D DWConv used to compute the dynamic scale and bias are kept as is.

**The AST & VAST Architectures.** Using the Affine-Shift block and its video extension the Affine-Shift Transformer (AST), and the Video Affine-Shift Transformer (VAST), are constructed. The standard hierarchical (pyramidal) structure is followed for these attention-free transformers, where the resolution is dropped between stages, similar to a ResNet.

For image classification (i.e. ImageNet), the final predictions are obtained by taking the mean across all tokens and feeding the obtained feature to a linear classifier. For videos, either a feature representation is formed via global pooling, or the data is aggregated using the temporal attention aggregation layer proposed by A. Bulat et al (Adrian Bulat, Juan Manuel Perez Rua, Swathikiran Sudhakaran, Brais Martinez, and Georgios Tzimiropoulos. Space-time mixing attention for video transformer. NeurIPS, 2021.) before passing it to a classifier. Figure 3 is a table showing the definitions of variants of the model of the present techniques. $E_i$ defines the expansion rate at each stage inside the MLP, the multiplier shows the number of blocks at the current stage and $C_i$ denotes the number of channels. $T$ is kept constant across stages.

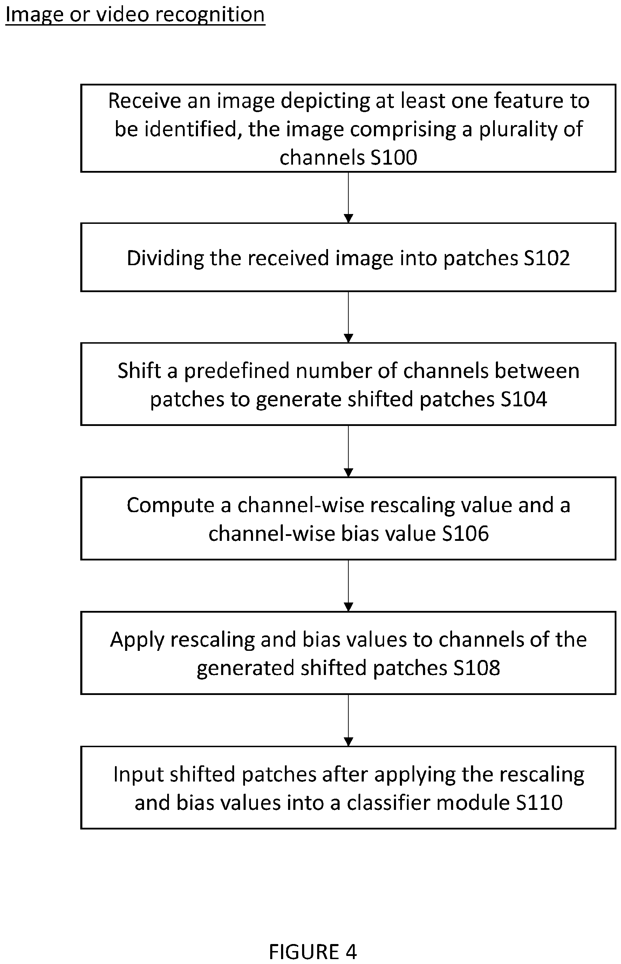

Figure 4 shows a flowchart of example steps for performing image or video recognition using the ML model of the present techniques. The method comprises: receiving an image depicting at least one feature to be identified, the image comprising a plurality of channels (step S100). Image or video recognition means recognising actors, objects, actions, sequences of interest, and so on within an image or video. In some cases, the received image may be a single image (e.g. a photograph or a single frame of a video). In such cases, the Affine-Shift Transformer (AST) of the present techniques may be used. In some cases, the received image may be a video comprising a plurality of frames. In such cases, the Video Affine-Shift Transformer (VAST) of the present techniques may be used.

The method comprises: dividing the received image into a plurality of patches (step S102), and then shifting a predefined number of channels between patches to generate shifted patches (step S104).

At step S104, if the received image is a single image, shifting a predefined number of channels between patches of the image may comprise shifting a predefined number of channels across a first dimension and a second dimension. The first dimension may be in the width direction of the image and the second dimension may be in the height direction of the image (or vice versa). The shifting may comprise shifting a predefined number of channels between adjacent patches of the image. The shifting is preferably in both directions. That is, for three patches n-1, n and n+1, some channels from patch n-1 may be shifted to patch n, and some channels from patch n may be shifted to n-1. Similarly, some channels from patch n+1 may be shifted to patch n, and some channels from patch n may be shifted to patch n-1.

At step S104, if the received image is a video comprising multiple frames, shifting a predefined number of channels between patches of the image may comprise shifting a predefined number of channels across a first dimension, a second dimension and a third dimension. The first dimension may be in the width direction of the image, the second dimension may be in the height direction of the image, and the third dimension may be in the time dimension (i.e. to another frame). That is, for three frames t-1, t and t+1, some channels in each frame may be shifted in the width direction and heigh direction within the frame (in the same way as for the single image example). In addition, for the shifting in the third dimension, some channels from frame t-1 may be shifted to frame t and some channels from frame t may be shifted to frame t-1, and some channels from frame t+1 may be shifted to frame t, and some channels from frame t may be shifted to frame t-1. The shifting may be applied uniformly in each of the first, second and third dimensions.

In the case of videos, for each frame of the plurality of frames, the shifting may comprise shifting a predefined number of channels across the first dimension and the second dimension between patches in the frame, and shifting a predefined number of channels across the third dimension between patches of adjacent frames.

In this way, for both single images and videos, channels are swapped or shifted between patches. This shifting achieves token mixing. This is advantageous because the token mixing avoids the need to perform complex matrix multiplications (which are required by the attention mechanism), and therefore, the computational complexity of the ML model of the present techniques is reduced relative to attention-based Transformer models.

At step S104, shifting a predefined number of channels between patches may comprise shifting a predefined number of channels between non-adjacent patches (e.g. between patches n-2, n and n+2). Alternatively, shifting a predefined number of channels between patches may comprise shifting a predefined number of channels between adjacent patches.

At step S104, shifting a predefined number may comprise shifting up to half of a total number of channels for each patch. For example, the predefined number may be a quarter of a total number of channels for each patch. That is 25% of the channels from one patch may be shifted to another patch (in the same image or to another frame). In this example, one patch n may comprise 50% of the channels of patch n and 25% from patch n-1 and 25% from patch n+1, for instance. In another example, the predefined number may be half of the channels for each patch. This is also explained with reference to Figure 6.

The method comprises: computing, using the shifted patches, a channel-wise rescaling value and a channel-wise bias value (step S106); applying the computed rescaling and bias values to the channels of the shifted patches (step S108); and inputting the shifted patches, after applying the rescaling and bias values to the channels, into a classifier module of the ML model (step S110). The features shown within the patches can now be classified by the classifier in the normal way to identify objects, actions, gestures, etc. of interest.

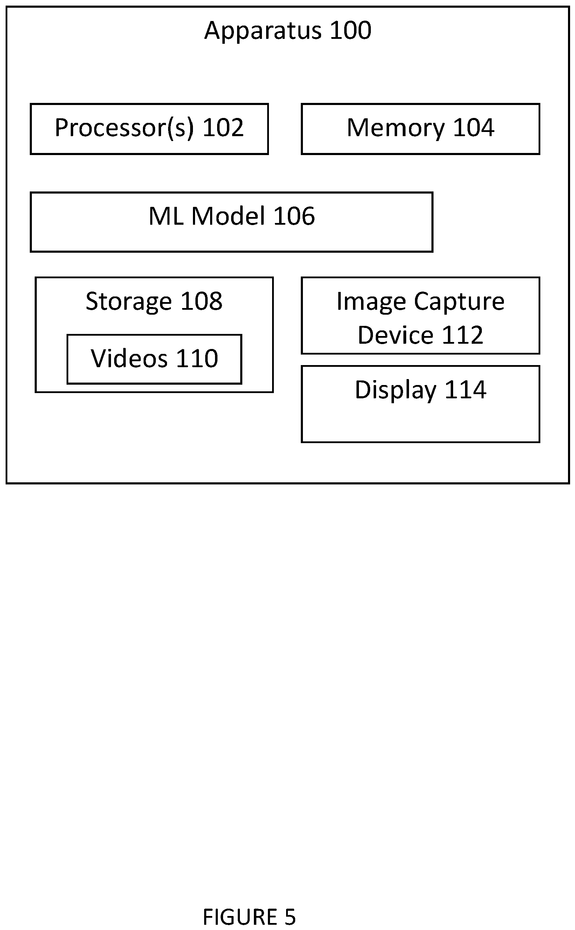

Figure 5 is a schematic diagram of an apparatus 100 for performing image or video recognition. The apparatus 100 may be, for example, a constrained-resource device, but which has the minimum hardware capabilities to use a trained neural network/ML model. The apparatus may be: a smartphone, tablet, laptop, computer or computing device, virtual assistant device, a vehicle, a drone, an autonomous vehicle, a robot or robotic device, a robotic assistant, image capture system or device, an augmented reality system or device, a virtual reality system or device, a gaming system, an Internet of Things device, a smart consumer device, a smartwatch, a fitness tracker, and a wearable device. It will be understood that this is a non-exhaustive and non-limiting list of example apparatus.

The apparatus comprises a trained machine learning, ML, model 106. The ML model 106 may be a vision transformer or similar model suitable for performing video or image recognition. The ML model 106 has an affine-shift block and/or a video affine-shift block of the types described herein.

The apparatus comprises at least one processor 102 coupled to memory 104. The processor may be arranged to: receive an image depicting at least one feature to be identified, the image comprising a plurality of channels; divide the received image into a plurality of patches; shift a predefined number of channels between patches to generate shifted patches; compute, using the shifted patches, a channel-wise rescaling value and a channel-wise bias value; apply the computed rescaling and bias values to the channels of the shifted patches; and input the shifted patches, after applying the rescaling and bias values to the channels, into a classifier module of the ML model 106.

The at least one processor 102 may comprise one or more of: a microprocessor, a microcontroller and an integrated circuit. The memory 104 may comprise volatile memory, such as random access memory (RAM), for use as temporary memory, and/or non-volatile memory such as Flash, read only memory (ROM), or electrically erasable programmable ROM (EEPROM), for storing data, programs, or instructions, for example.

The apparatus 100 may comprise at least one image capture device 112 configured to capture an image or video comprising a plurality of frames. The image capture device 112 may be a camera. Additionally or alternatively the apparatus 100 may comprise at least one interface for receiving an image or video for analysis.

The apparatus 100 may further comprise: analysing, using the at least one processor 102, the received image or video in real-time using the feature identification process. Thus, advantageously, the present techniques can be used on resource-constrained devices, and can also be used in real-time to analyse videos being captured by the at least one image capture device in real- or near real-time.

Real-time analysis may be useful for a number of reasons. For example the at least one processor may be used to: identify, using a result of the classifier module, one or more actions or gestures in the received video/image; and/or identify, using a result of the classifier module, one or more objects in the received video/image. Gesture or action recognition may be useful because it may enable a user to control the image capture process using actions.

It may also enable a capture mode of the image capture device to be adjusted based on what objects or actions or gestures are identified in the video. For example, when the image/video recognition process determines that the image/video features a sport being played or other fast-moving action, then it may be useful for the capturing mode to change (to, for example, a more suitable number of frames per second, or to slow motion mode, or at a very high resolution) so that the action can be better recorded. Thus, the at least one processor may be used to: control a capture mode of the at least one image capture device in response to the result of the classifier module.

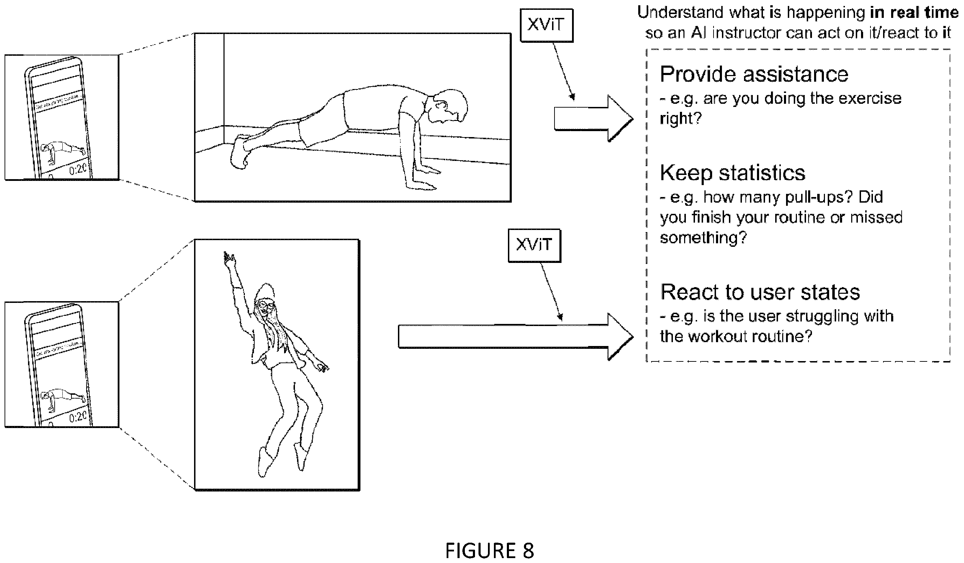

In another example, the received video may comprise a user performing at least one action, such as cooking or exercise. Figure 8 shows an example use of the present techniques to analyse a video in real-time. The at least one processor may be arranged to: provide feedback to the user, via a user interface, based on the at least one action performed by the user. This may enable an AI instructor or AI assistant to understand what the user is doing in real-time and provide suitable information to the user. For example, the AI instructor/assistant may provide assistance or guidance to the user if the user does not appear to be performing an exercise correctly, or may provide motivational information to the user to encourage them to continue performing the exercise. The user's emotional state may be determined using the video recognition process and this may enable the AI instructor to react to the user's emotional state. For example, if the user is struggling with an exercise routine, the AI instructor may output motivational information or may encourage the user to take a short break.

The apparatus 100 may comprise storage 108 storing at least one video 110, and at least one interface for receiving a user query. For example, the apparatus may comprise a display or any other suitable interface such as a microphone, speaker, camera, touchscreen, keyboard, and so on.

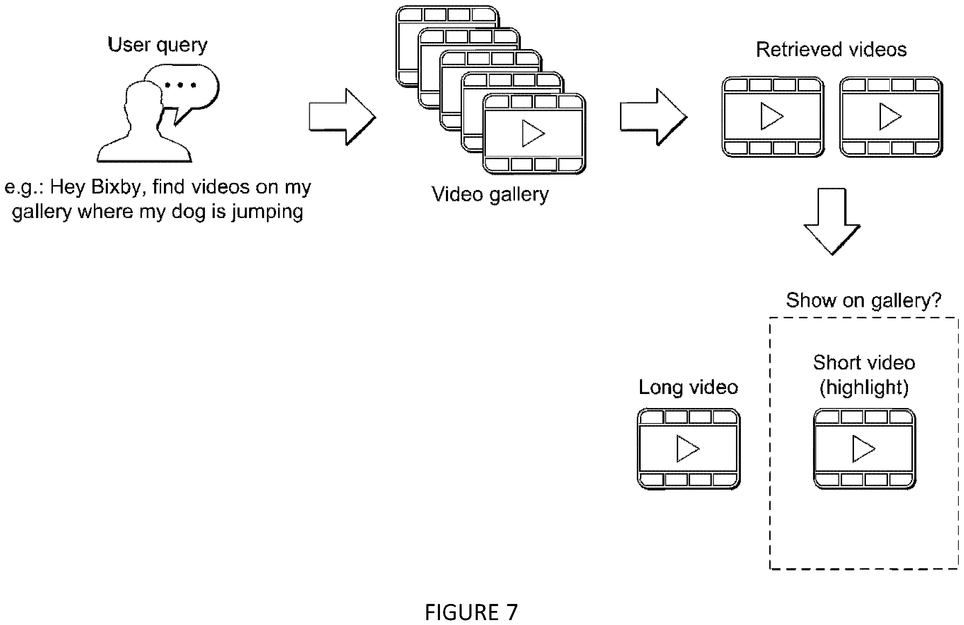

The video recognition process may also function on pre-recorded videos 110. The at least one processor may be arranged to: receive, via the at least one interface, a user query requesting any video from the storage 108 that contains a specific feature; use the image/video recognition process to identify any video containing the specific feature; and output each video containing the specific feature to the user via the at least one interface. Figure 7 shows an example use of the present techniques to query a video gallery. In this example, the user query may be "Hey Bixby, find videos on my gallery where my dog is jumping". The image/video recognition process be used to identify any video in the storage that shows the user's dog jumping, and then these videos may be output to the user. The user may speak or type their query, and the output may be displayed on a display screen of the apparatus or a response may be output via a speaker (e.g. "We have found two videos of your dog jumping").

In this example, the at least one processor may be arranged to store, with each video containing the specific feature: the class corresponding to the specific feature, and information indicating when the class appears in the video. Thus, the identified videos may be labelled with the class such that the videos can be output in the future without needing to the image/video recognition process again (for the same feature(s)).

The at least one processor may output a whole video containing the specific feature or a segment of the video containing the specific feature, wherein the segment includes the specific feature. That is, the whole video may be output where the specific feature is located somewhere in the video, or a highlight segment may be output which shows the specific feature itself. The highlight segment is advantageous when the whole video is more than a few minutes long. For example, the whole video may be of the user's child playing a football game, but the user may only want to see the part in the video where the user's child scores a goal. The whole video may be over an hour long, so the highlight segment is useful as it means the user does not have to watch or skip through the video to find the moment when the user's child scores a goal.

The details of experiments to evaluate the present techniques are now described, as well as the process to train the model of the present techniques. All references mentioned here are listed at the end of this document.

**Datasets:** The present model was trained and evaluated for large-scale image recognition on ImageNet, and on three action recognition datasets, namely on Kinetics-400 and Kinetics-600, and Something-Something-v2 (SSv2). ImageNet experiments aim to confirm the effectiveness of the proposed AST compared to other recently proposed shift-based and MLP-based architectures, as these works have not been applied to video domain before.

**Training details on Video:** All models, unless otherwise stated, were trained following using the technique described by Fan et al. Specifically, the models were trained using AdamW, with cosine scheduler by Loshchilov et al, and linear warmup for a total of 50 epochs. The base learning rate, set at a batch size of 128, was $2e$ - 4 ($4e$ - 4 for SSv2) and weight decay was 0.05. To prevent over-fitting the following augmentation techniques were used: random scaling (0.08× to 1.0×) and cropping, random flipping (with probability of 0.5; not for SSv2), rand augment (Cubuk et al), color jitter (0.4), mixup ($\alpha = 0.8$) (Hongyi Zhang et al) and cutmix ($\alpha = 1$) (Sangdoo Yun et al), random erasing (Zhun Zhong et al) and label smoothing ($\lambda = 0.1$) (Christian Szegedy et al). During training with a 50% probability a choice between cutmix and mixup is made. All augmentations are applied consistently across each frame to prevent the introduction of temporal distortions. For Kinetics, the path dropout rate is set to 0.1 while on SSv2 to 0.3. However, unlike Fan et al, here the drop path that affects Affine-Shift blocks is dropped as due to the local token mixing, the receptive field depends on the number of mixing steps.

The models were initialized from ImageNet-1k for Kinetics-400/600 and from Kinetics-400 for SSv2. When initializing from a 2D model, if a 3D patch embedding is used, it was initialized using the strategy from Fan et al. Only a 3D patch embedding is used for SSv2. The models were trained on 8 V100 GPUs using PyTorch (Adam Paszke et al).

**Testing details on Video:** Unless otherwise stated, 8, 16 or 32 frames are used. If a 3D stem is used (on SSv2), the effective temporal dimension is halved. Results are reported for 1 × 3 views (1 temporal and 3 spatial crops) as in Bulat et al.

**Affine shift analysis and variations.** Firstly, the impact of the three main components described in the Affine-Shift module are analysed: the shift operation, the dynamic re-scaling (M LP) and bias (DWConv) in Equation 9. Figure 2 shows a table of data of the effect of various shift-based variants of the present techiques in terms of Top-1 accuracy (%) on ImageNet. All models have roughly 3.9 GFLOPs. As Figure 2 shows, replacing the MHSA with *Shift*(.) (R1) works reasonably well and sets a strong baseline result. Adding the dynamic bias (R2) or the dynamic scale (R3) alone improves the result by almost 1.5%. Finally, adding them both simultaneously (R4) improves 2.4% and results in the strongest performance. This showcases that all of the introduced components are necessary. The transformer block consists of MHSA and MLP blocks (Equations 1- 2). As the MHSA has already been replaced with *Shift*(.), a natural question to ask is whether the results can be further imporved by adding an additional shift within the MLP block in the transformer. As the results show (R5), the performance saturates and no additional gains are observed. This suggests that due to the number of layers, the effective receptive size toward the end of the network is sufficiently large, making additional shift operations redundant.

Finally, the approach of the present techniques is compared with a more direct alternative, that of replacing Equation 1 in its entirety with a shift operation. As the results of (R6) show, while promising, the Affine-Shift block is significantly better (+3.0%).

As mentioned above, the number of channels that are shifted between patches may vary. A potentially important factor to influence accuracy is the total amount of channels shifted across all dimensions. Figure 6 shows the impact of the number of shifted channels on the overall accuracy in terms of Top-1 acc (%) on ImageNet. As the results from Figure 6 show, the proposed module is generally robust to the amount of shift within the range 25% - 50%. It is noted that sustaining the accuracy at lower levels of shift is especially promising for video data, where the number of dimensions that need to shift across increases.

**Hybrid transformers:** The effect of replacing the last layers of AST and VAST with global attention was explored, by testing the following cases: replacing the Stage IV (AST-Tiny-H4) and both stages IV and III with attention (AST-Tiny-H34). When adapting the hybrid model for video recognition, the added attention layers are replace with space-time mixing modules (2D attention + shift), as this was shown to outperform full space-time attention. As the results in Table 1 show, on ImageNet, small performance improvements can be observed albeit at increased cost. This suggests that the present model is generally a good in-place replacement and approximation to attention. However, for action recognition, on Kinetics-400, slightly larger improvements are observed. This than can be perhaps attributed to the nature of the dataset and the amount of channels shifted which is higher overall in the 3D case.

TABLE 1:

| Arch. | Method | #Param. (M) | FLOPs (G) | Train Size | Test Size | Top-1 (%) |
|---|---|---|---|---|---|---|
| CNN | RegNetY-4G | 21 | 4.0 | 224 | 224 | 80.0 |
| | EfficientNet-B5 | 30 | 9.9 | 456 | 456 | 83.6 |
| | EfficientNetV2-S | 22 | 8.5 | 384 | 384 | 83.9 |
| Tran | DeiT-S | 22 | 4.6 | 224 | 224 | 79.9 |
| | PVTv2-B2-Li | 25 | 3.9 | 224 | 224 | 82.1 |

| | | | | | | |
|---|---|---|---|---|---|---|
| Hyb. | Swin-T | 29 | 4.5 | 224 | 224 | 81.3 |
| | Focal-T | 29 | 4.9 | 224 | 224 | 82.2 |
| | CvT-13 | 20 | 4.5 | 224 | 224 | 81.6 |
| | CoAtNet-0 | 25 | 4.2 | 224 | 224 | 81.6 |
| | LV-ViT-S | 26 | 6.6 | 224 | 224 | 83.3 |
| No-attn. | EAMLP-14 | 30 | – | 224 | 224 | 78.9 |
| | ResMLP-S24 | 30 | 6.0 | 224 | 224 | 79.4 |
| | gMLP-S | 20 | 4.5 | 224 | 224 | 79.6 |
| | GFNet-S | 25 | 4.5 | 224 | 224 | 80.0 |
| | GFNet-H-S | 32 | 4.5 | 224 | 224 | 81.5 |
| | AS-MLP-T | 28 | 4.4 | 224 | 224 | 81.3 |
| | CycleMLP-B2 | 27 | 3.9 | 224 | 224 | 81.6 |
| | ViP-Small/7 | 25 | 6.9 | 224 | 224 | 81.5 |
| | $S^2$-MLPv2-S/7 | 25 | 6.9 | 224 | 224 | 82.0 |
| | MorphMLP-T | 23 | 3.9 | 224 | 224 | 81.6 |
| | Shift-T | 28 | 4.4 | 224 | 224 | 81.7 |
| | **AST -Ti (Ours)** | 19 | 3.9 | 224 | 224 | 82.0 |

Table 1 shows results on ImageNet for the variant of most interest of the present model, tiny (AST -Ti), and for all recently proposed Shift/MLP and MLP-based backbones. Moreover, to ground the results, a few recently proposed efficient CNN, transformer and hybrid architectures are included. As it can be observed, the present tiny model, AST -Ti, is the most accurate among models of similar size, and it outperforms the two closest competitors MorphMLP-T and Cycle-MLP-B2 by 0.4%. Note that the main focus of the present techniques is on efficient models, hence results for smaller variants are primarily reported. The results of Table 1 clearly show that the present model offers the best accuracy/computational complexity tradeoff among all prior attention-free "transformers" (Shift/MLP and MLP-based), setting a new state-of-the-art result.

Results using four different variants of the present model are presented: tiny and small sizes for both 8 and 16 frames, i.e. VAST-Ti-8, VAST-Ti-16, VAST-S-8 & VAST-S-16. For SSv2, a 3D stem is used, reducing the temporal dimensionality by 2. Thus, if for example, if 32 input frames are noted in the results, the actual configuration (and cost) corresponds to the 16-frame variants.

The four variants are compared with the state-of-the-art in video recognition. In addition to classic CNN-based approaches, comparison is made with early efforts in video transformers, namely TimeSformer, ViVit, Mformer, the video version of the Swin Transformer as well as the state-of-the-art, namely MViT, XViT. A comparison is also made with UniFormer, a hybrid model that is the state-of-the-art for video recognition. Both light and heavier versions for all of these models are included.

Tables 2 and 3 below show the results on K-400 and K-600 respectively. On both datasets, the present tiny model VAST-Ti-8 largely outperforms all early approaches to video transformers. It also surpasses MViT-S, the lightest version of MViT, by +2% using 2 × fewer FLOPs on K-400, and beats MViT-B by 0.7% with less than 3 × fewer FLOPs on K-600. Compared to XViT (initialized in ImageNet-21K), the present model achieves similar performance (-0.4% / +0.3% on K400 / K600) while utilizing 4 × fewer FLOPs. A scaled-up version of the present model, VAST-S-16, matches the best XViT model while utilizing less than 2 × fewer FLOPs. Finally, when compared to UniFormer, the present VAST-S tightly matches the number of FLOPs of UniFormer-S, while achieving lower performance in K-400 but higher in K-600. It is noted here that these UniFormer results are achieved with a very long 110 epochs schedule, departing from the typical 50-epochs schedule for transformers on Kinetics. The data also includes results on a 50 epoch schedule (only for K400). This result is shown in Table 2. When considering the 50-epoch UniFormer, the present model performs closely to UniFormer on K-400, yet still outperforms the 110-epoch model on K-600. In summary, results on K-400 and K-600 clearly show that the present purely shift-based model is capable of competing with the current state-of-the-art models while not using any attention layers.

TABLE 2:

| Arch | Method | Top-1 Acc. (%) | Top-5 Acc. (%) | Frames | Views | #train epochs | FLOPS x $10^9$ |
|---|---|---|---|---|---|---|---|
| CNNs | TSM (R50) | 74.7 | - | 16 | $10 \times 3$ | 100 | 650 |
| | TokShift | 77.3 | 92.3 | 8 | $10 \times 3$ | 18 | 4,041 |
| | SlowFast | 78.7 | 93.5 | 8 | $10 \times 3$ | 196 | 3,480 |
| | X3D-S | 72.9 | 90.5 | — | $10 \times 3$ | 256 | 58 |
| | X3D-L | 76.8 | 92.5 | — | $10 \times 3$ | 256 | 551 |
| | TAdaConvNeXt-T | 79.1 | 93.7 | 32 | $4 \times 3$ | 100 | 1,128 |
| | TimeSformer | 78.0 | 93.7 | 8 | $1 \times 3$ | 15 | 590 |
| Transf. & Hybrid | ViViT-B/16x2 | 78.8 | - | 32 | $4 \times 3$ | 30 | 3,408 |
| | XViT-B | 78.4 | 93.7 | 8 | $1 \times 3$ | 50 | 425 |
| | XViT-B | 80.2 | 94.7 | 16 | $1 \times 3$ | 50 | 850 |
| | MViT-S | 76.0 | 92.1 | - | $5 \times 1$ | 200 | 165 |
| | MViT-B ($16 \times 4$) | 78.4 | 93.5 | 16 | $5 \times 1$ | 200 | 352 |
| | En-VidTr-S | 79.4 | 94.0 | 8 | $10 \times 3$ | 50 | 3,900 |
| | Swin-T | 78.8 | 93.6 | — | $4 \times 3$ | 30 | 1,056 |
| | Swin-S | 80.6 | 94.5 | — | $4 \times 3$ | 30 | 1,992 |
| | UniFormer-S | 79.3 | - | 16 | $4 \times 1$ | 50 | 167 |
| | UniFormer-S | 80.8 | 94.7 | 16 | $4 \times 1$ | 110 | 167 |
| | MorphMLP-S | 78.7 | 93.8 | 16 | $4 \times 1$ | 60 | 268 |
| No att. | MorphMLP-S | 79.7 | 94.2 | 32 | $4 \times 1$ | 60 | 532 |
| | **VAST-Ti (Ours)** | 78.0 | 93.2 | 8 | $3 \times 1$ | 50 | 98 |

| | | | | | | | |
|---|---|---|---|---|---|---|---|
| | **VAST-Ti (Ours)** | 79.0 | 93.8 | 16 | $3 \times 1$ | 50 | 196 |
| | **VAST-S (Ours)** | 78.9 | 93.8 | 8 | $3 \times 1$ | 50 | 169 |
| | **VAST-S (Ours)** | 80.0 | 94.5 | 16 | $3 \times 1$ | 50 | 338 |

TABLE 3:

| Arch | Method | Top-1 Acc. (%) | Top-5 Acc. (%) | Frames | Views | FLOPS x $10^9$ |
|---|---|---|---|---|---|---|
| CNNs | LGD-3D R101 | 81.5 | 95.6 | — | — | - |
| | SlowFast | 80.4 | 94.8 | 8 | $10 \times 3$ | 3,180 |
| | X3D-M | 78.8 | 94.5 | — | $10 \times 3$ | 186 |
| | X3D-XL | 81.9 | 95.5 | — | $10 \times 3$ | 1,452 |
| Transf. & Hybrid | TimeSformer | 79.1 | 94.4 | 8 | $1 \times 3$ | 590 |
| | TimeSformer-HR | 81.8 | 95.8 | 8 | $1 \times 3$ | 590 |
| | ViViT-L/16x2 | 82.9 | 94.6 | 32 | $4 \times 3$ | 17,352 |
| | Mformer | 81.6 | 95.6 | — | $10 \times 3$ | 11,070 |
| | XViT-B | 82.5 | 95.4 | 8 | $1 \times 3$ | 425 |
| | XViT-B | 84.5 | 96.3 | 16 | $1 \times 3$ | 850 |
| | MViT-B ($16 \times 4$) | 82.1 | 95.7 | 16 | $5 \times 1$ | 352 |
| | MViT-B ($32 \times 3$) | 83.4 | 96.3 | 32 | $5 \times 1$ | 850 |
| | UniFormer-S | 82.8 | 95.8 | 16 | $4 \times 1$ | 167 |
| | UniFormer-B | 84.0 | 96.4 | 16 | $4 \times 1$ | 389 |
| No at. | **VAST-Ti (Ours)** | 82.8 | 94.5 | 8 | $3 \times 1$ | 98 |
| | **VAST-S (Ours)** | 84.0 | 95.5 | 8 | $3 \times 1$ | 169 |

For SSv2, firstly it is necessary to emphasize that initialization plays a very important role, so models initialized on different dataset are hard to compare. In light of this, only comparisons with methods pre-trained there (and potentially on K-600) are meaningful. As Table 4 below shows, the present models outperform all other models in terms of accuracy vs FLOPs. For example, the lightest of the present models (VAST-Ti) outperforms the lightest XViT and MViT by 3.4% and 3.1% while utilizing less than 4 × and 2 × fewer FLOPs, respectively. Compared to UniFormer, the present lighter models slightly underperform while VAST-S surpasses UniFormer-B by 0.5% with minimal FLOP increase. The same conclusions are drawn as for Kinetics, and note that the present purely shift-based model is capable of beating or matching current transformer and hybrid state-of-the-art models while advantageously not using any attention layers.

TABLE 4:

| Arch | Method | Top-1 Acc. (%) | Top-5 Acc. (%) | Frames | Views | FLOPS x $10^9$ |
|---|---|---|---|---|---|---|
| CNNs | SlowFast | 61.7 | - | 8 | 1 × 3 | 197 |
| | TSM (R50) | 63.3 | 88.5 | 16 | 2 × 3 | 650 |
| | RubikNet | 61.7 | 87.3 | 8 | 1 × 2 | 32 |
| | CT-Net | 65.9 | 90.1 | 16 | 2 × 3 | 450 |
| Transf. & Hybrid | TAdaConvNeXt-T | 67.1 | 90.4 | 32 | 2 × 3 | 564 |
| | TimeSformer | 59.5 | - | 96 | 1 × 3 | 590 |
| | XViT-B | 67.2 | 90.8 | 16 | 1 × 3 | 850 |
| | MViT-B (16 × 4) | 64.7 | 89.2 | 16 | 3 × 1 | 211 |
| | MViT-B (32 × 4) | 67.8 | 91.3 | 16 | 1 × 3 | 510 |
| | Mformer | 66.5 | 90.1 | — | 3 × 1 | 1,110 |
| | Swin-B | 69.6 | 92.7 | — | 3 × 1 | 963 |
| | UniFormer-S | 69.4 | 92.1 | 16 | 3 × 1 | 125 |
| | UniFormer-B | 70.4 | 92.8 | 16 | 3 × 1 | 290 |
| No attn. | MorphMLP-S | 67.1 | 90.9 | 16 | 3 × 1 | 201 |
| | MorphMLP-S | 68.3 | 91.3 | 32 | 3 × 1 | 405 |
| | **VAST-Ti (Ours)** | 67.8 | 90.8 | 16 | 3 × 1 | 98 |
| | **VAST-Ti (Ours)** | 69.3 | 91.3 | 32 | 3 × 1 | 196 |
| | **VAST-S (Ours)** | 68.7 | 91.0 | 16 | 3 × 1 | 169 |
| | **VAST-S (Ours)** | 70.9 | 92.1 | 32 | 3 × 1 | 338 |

Thus, the present techniques provide a high-performing efficient video transformer without self-attention, which the results clearly demonstrate has been achieved. A new attention-free shift-based block, coined *Affine-Shift*, is provided, which is specifically designed to *approximate* as closely as possible *the operations* in the MHSA block of a transformer layer. In particular, distinct from prior work, the Affine-Shift block not only mimics the token mixing properties of the self-attention, but also incorporates a mechanism for dynamic token re-scaling. Based on this Affine-Shift block, AST is constructed and show that it outperforms all prior attention-free models on ImageNet, particularly for the case of low complexity models. By extending the present Affine-Shift block in the video domain, VAST was built and it has been shown that it is significantly more efficient than existing state-of-the-art video transformers, and competitive with the best hybrid models, on the standard set of action recognition benchmarks.

References:

- ImageNet: Jia Deng, Wei Dong, Richard Socher, Li-Jia Li, Kai Li, and Li Fei-Fei. Imagenet: A large-scale hierarchical image database. In CVPR, 2009
- Kinetics-400 & Kinetics-600 Will Kay, Joao Carreira, Karen Simonyan, Brian Zhang, Chloe Hillier, Sudheendra Vijayanarasimhan, Fabio Viola, Tim Green, Trevor Back, Paul Natsev, et al. The kinetics human action video dataset. arXiv preprint arXiv:1705.06950, 2017.
- Something-Something-v2: Raghav Goyal, Samira Ebrahimi Kahou, Vincent Michalski, Joanna Materzynska, Susanne Westphal, Heuna Kim, Valentin Haenel, Ingo Fruend, Peter Yianilos, Moritz Mueller-Freitag, et al. The "something something" video database for learning and evaluating visual common sense. In ICCV, 2017.
- Fan et al: Haoqi Fan, Bo Xiong, Karttikeya Mangalam, Yanghao Li, Zhicheng Yan, Jitendra Malik, and Christoph Feichtenhofer. Multiscale vision transformers. arXiv preprint arXiv:2104.11227, 2021.

- AdamW: Adam Paszke, Sam Gross, Francisco Massa, Adam Lerer, James Bradbury, Gregory Chanan, Trevor Killeen, Zeming Lin, Natalia Gimelshein, Luca Antiga, et al. Pytorch: An imperative style, high performance deep learning library. arXiv preprint arXiv:1912.01703, 2019.
- Loshchilov et al: Ilya Loshchilov and Frank Hutter. Sgdr: Stochastic gradient descent with warm restarts. arXiv preprint arXiv:1608.03983, 2016.
- Cubuk et al: Ekin D Cubuk, Barret Zoph, Jonathon Shlens, and Quoc V Le. Randaugment: Practical automated data augmentation with a reduced search space. In Proceedings of the IEEE/CVF Conference on Computer Vision and Pattern Recognition Workshops, pp. 702-703, 2020.
- Hongyi Zhang, Moustapha Cisse, Yann N Dauphin, and David Lopez-Paz. mixup: Beyond empirical risk minimization. ICLR, 2018.
- Sangdoo Yun, Dongyoon Han, Seong Joon Oh, Sanghyuk Chun, Junsuk Choe, and Youngjoon Yoo. Cutmix: Regularization strategy to train strong classifiers with localizable features. In Proceedings of the IEEE/CVF international conference on computer vision, pp. 6023-6032, 2019.
- Random erasing: Zhun Zhong, Liang Zheng, Guoliang Kang, Shaozi Li, and Yi Yang. Random erasing data augmentation. In AAAI, 2020.
- Pytorch: Adam Paszke, Sam Gross, Francisco Massa, Adam Lerer, James Bradbury, Gregory Chanan, Trevor Killeen, Zeming Lin, Natalia Gimelshein, Luca Antiga, et al. Pytorch: An imperative style, high performance deep learning library. arXiv preprint arXiv:1912.01703, 2019.
- Adrian Bulat, Juan Manuel Perez Rua, Swathikiran Sudhakaran, Brais Martinez, and Georgios Tzimiropoulos. Space-time mixing attention for video transformer. NeurIPS, 2021.
- Label smoothing: Christian Szegedy, Vincent Vanhoucke, Sergey Ioffe, Jon Shlens, and Zbigniew Wojna. Rethinking the inception architecture for computer vision. In CVPR, 2016.

Those skilled in the art will appreciate that while the foregoing has described what is considered to be the best mode and where appropriate other modes of performing present techniques, the present techniques should not be limited to the specific configurations and methods disclosed in this description of the preferred embodiment. Those skilled in the art will recognise that present techniques have a broad range of applications, and that the embodiments may take a wide range of modifications without departing from any inventive concept as defined in the appended claims.

## Claims

1. A computer-implemented method for performing image or video recognition using a transformer-based machine learning, ML, model, the method comprising:

   receiving an image depicting at least one feature to be identified, the image comprising a plurality of channels;
   dividing the received image into a plurality of patches;
   mixing the channels using a projection of the plurality of patches;
   shifting a predefined number of channels between patches to generate shifted patches;
   computing, using the shifted patches, a channel-wise rescaling value and a channel-wise bias value;
   applying the computed rescaling and bias values to the channels of the shifted patches; and
   inputting the shifted patches, after applying the rescaling and bias values to the channels and further mixing of the channels using a projection of the shifted patches, into a classifier module of the ML model.

2. The method as claimed in claim 1 wherein computing the channel-wise rescaling value comprises using a multilayer perceptron module of the ML model.

3. The method as claimed in claim 1 or 2 wherein computing the channel-wise bias value comprises using a depthwise convolution module of the ML model.

4. The method as claimed in any one of claims 1 to 3 wherein the received image is a single image and shifting a predefined number of channels between patches of the image comprises shifting a predefined number of channels across a first dimension and a second dimension.

5. The method as claimed in claim 4 wherein the shifting comprises shifting a predefined number of channels between adjacent patches of the image.

6. The method as claimed in any one of claims 1 to 3 wherein receiving an image comprises receiving a plurality of frames of a video, and wherein shifting a predefined number of channels between patches of the image comprises shifting a predefined number of channels across a first dimension, a second dimension and a third dimension.

7. The method as claimed in claim 6 wherein the shifting is applied uniformly in each of the first, second and third dimensions.

8. The method as claimed in claim 6 or 7 wherein, for each frame of the plurality of frames, the shifting comprises shifting a predefined number of channels across the first dimension and the second dimension between patches in the frame, and shifting a predefined number of channels across the third dimension between patches of adjacent frames.

9. The method as claimed in any one of claims 1 to 8 wherein shifting a predefined number of channels between patches comprises shifting a predefined number of channels between non-adjacent patches.

10. The method as claimed in any one of claims 1 to 8 wherein shifting a predefined number of channels between patches comprises shifting a predefined number of channels between adjacent patches.

11. The method as claimed in any preceding claim wherein inputting the shifted patches into a classifier module comprises:

aggregating feature predictions from each shifted patch of the received image to obtain an aggregated feature prediction; and
inputting the aggregated feature prediction into the classifier.

12. The method as claimed in any preceding claim wherein shifting a predefined number comprises shifting up to half of a total number of channels for each patch.

13. A computer-readable storage medium comprising instructions which, when executed by a processor, causes the processor to carry out the method of any of claims 1 to 12.

14. An apparatus (100) for performing image or video recognition using a transformer-based machine learning, ML, model (106), the apparatus comprising:
at least one processor (102) coupled to memory (104) and arranged for:

receiving an image depicting at least one feature to be identified, the image comprising a plurality of channels;

dividing the received image into a plurality of patches;
mixing the channels using a projection of the plurality of patches;

shifting a predefined number of channels between patches to generate shifted patches;
computing, using the shifted patches, a channel-wise rescaling value and a channel-wise bias value;
applying the computed rescaling and bias values to the channels of the shifted patches; and
inputting the shifted patches, after applying the rescaling and bias values to the channels and further mixing of the channels using a projection of the shifted patches, into a classifier module of the ML model.

15. The apparatus (100) as claimed in claim 14 wherein the at least one processor is further arranged to:
identify, using a result of the classifier module, one or more actions, gestures or objects in the received image.

**Patentansprüche**

1. Computerimplementiertes Verfahren zur Durchführung einer Bild- oder Videoerkennung unter Verwendung eines transformatorbasierten maschinellen Lern-, ML-Modells, wobei das Verfahren Folgendes umfasst:

Empfangen eines Bilds, das mindestens ein zu identifizierendes Merkmal darstellt, wobei das Bild eine Vielzahl von Kanälen umfasst;
Aufteilen des empfangenen Bilds in eine Vielzahl von Ausschnitten;

Mischen der Kanäle unter Verwendung einer Projektion der Vielzahl von Ausschnitten;
Verschieben einer vordefinierten Anzahl von Kanälen zwischen Ausschnitten, um verschobene Ausschnitte zu erzeugen;
Berechnen eines kanalweisen Skalierungswerts und eines kanalweisen Bias-Werts unter Verwendung der verschobenen Ausschnitte;
Anwenden der berechneten Skalierungs- und Bias-Werte auf die Kanäle der verschobenen Ausschnitte; und
Eingeben der verschobenen Ausschnitte in ein Klassifikatormodul des ML-Modells, nachdem die Skalierungs- und Bias-Werte auf die Kanäle angewendet und die Kanäle mithilfe einer Projektion der verschobenen Ausschnitte weiter gemischt wurden.

2. Verfahren nach Anspruch 1, wobei das Berechnen des kanalweisen Skalierungswerts die Verwendung eines mehrschichtigen Perzeptronmoduls des ML-Modells umfasst.

3. Verfahren nach Anspruch 1 oder 2, wobei das Berechnen des kanalweisen Bias-Werts die Verwendung eines tiefen Faltungsmoduls des ML-Modells umfasst.

4. Verfahren nach einem der Ansprüche 1 bis 3, wobei das empfangene Bild ein Einzelbild ist und das Verschieben einer vordefinierten Anzahl von Kanälen zwischen Ausschnitten des Bildes das Verschieben einer vordefinierten Anzahl von Kanälen über eine erste und eine zweite Dimension umfasst.

5. Verfahren nach Anspruch 4, wobei das Verschieben das Verschieben einer vordefinierten Anzahl von Kanälen zwischen benachbarten Ausschnitten des Bildes umfasst.

6. Verfahren nach einem der Ansprüche 1 bis 3, wobei das Empfangen eines Bildes das Empfangen einer Vielzahl von Frames eines Videos umfasst, und wobei das Verschieben einer vordefinierten Anzahl von Kanälen zwischen Ausschnitten des Bildes das Verschieben einer vordefinierten Anzahl von Kanälen über eine erste Dimension, eine zweite Dimension und eine dritte Dimension umfasst.

7. Verfahren nach Anspruch 6, wobei die Verschiebung in der ersten, zweiten und dritten Dimension jeweils gleichmäßig angewendet wird.

8. Verfahren nach Anspruch 6 oder 7, wobei das Verschieben für jeden Frame der Vielzahl von Frames das Verschieben einer vordefinierten Anzahl von Kanälen über die erste Dimension und die zweite Dimension zwischen Ausschnitten im Frame und das Verschieben einer vordefinierten Anzahl von Kanälen über die dritte Dimension zwischen Ausschnitten benachbarter Frames umfasst.

9. Verfahren nach einem der Ansprüche 1 bis 8, wobei das Verschieben einer vordefinierten Anzahl von Kanälen zwischen Ausschnitten das Verschieben einer vordefinierten Anzahl von Kanälen zwischen nicht benachbarten Ausschnitten umfasst.

10. Verfahren nach einem der Ansprüche 1 bis 8, wobei das Verschieben einer vordefinierten Anzahl von Kanälen zwischen Ausschnitten das Verschieben einer vordefinierten Anzahl von Kanälen zwischen benachbarten Ausschnitten umfasst.

11. Verfahren nach einem der vorhergehenden Ansprüche, wobei das Eingeben der verschobenen Ausschnitte in ein Klassifizierermodul Folgendes umfasst:

Aggregieren von Merkmalsvorhersagen aus jedem verschobenen Ausschnitt des empfangenen Bildes, um eine aggregierte Merkmalsvorhersage zu erhalten; und
Eingeben der aggregierten Merkmalsvorhersage in den Klassifizierer.

12. Verfahren nach einem der vorhergehenden Ansprüche, wobei das Verschieben einer vordefinierten Zahl das Verschieben von bis zu der Hälfte der Gesamtanzahl von Kanälen für jeden Ausschnitt umfasst.

13. Computerlesbares Speichermedium mit Anweisungen, die, wenn sie von einem Prozessor ausgeführt werden, den Prozessor veranlassen, das Verfahren nach einem der Ansprüche 1 bis 12 auszuführen.

14. Vorrichtung (100) zur Durchführung einer Bild- oder Videoerkennung unter Verwendung eines transformatorbasierten maschinellen Lern-, ML-Modells (106), wobei die Vorrichtung Folgendes umfasst:
mindestens einen Prozessor (102), der mit einem Speicher (104) verbunden und angeordnet ist, um:

ein Bild zu empfangen, das mindestens ein zu identifizierendes Merkmal darstellt, wobei das Bild eine Vielzahl von Kanälen umfasst;

das empfangene Bild in eine Vielzahl von Ausschnitten aufzuteilen;

die Kanäle unter Verwendung einer Projektion der Vielzahl von Ausschnitten zu mischen;

eine vordefinierte Anzahl von Kanälen zwischen Ausschnitten zu verschieben, um verschobene Ausschnitte zu erzeugen;

unter Verwendung der verschobenen Ausschnitte einen kanalweisen Skalierungswert und einen kanalweisen Bias-Wert zu berechnen;

die berechneten Skalierungs- und Bias-Werte auf die Kanäle der verschobenen Ausschnitte anzuwenden; und

die verschobenen Ausschnitte nach Anwendung der Skalierungs- und Bias-Werte auf die Kanäle und weiterem Mischen der Kanäle unter Verwendung einer Projektion der verschobenen Ausschnitte in ein Klassifizierermodul des ML-Modells einzugeben.

15. Vorrichtung (100) nach Anspruch 14, wobei der mindestens eine Prozessor ferner dazu ausgelegt ist:
unter Verwendung eines Ergebnisses des Klassifizierungsmoduls eine oder mehrere Aktionen, Gesten oder Objekte im empfangenen Bild zu identifizieren.

## Revendications

1. Procédé mis en œuvre par ordinateur pour effectuer une reconnaissance d'image ou de vidéo à l'aide d'un modèle d'apprentissage automatique, ML, basé sur un transformateur, le procédé comprenant :

la réception d'une image représentant au moins une caractéristique à identifier, l'image comprenant une pluralité de canaux ;

la division de l'image reçue en une pluralité de patchs ; le mélange des canaux en utilisant une projection de la pluralité de patchs ;

le décalage d'un nombre prédéfini de canaux entre les patchs pour générer des patchs décalés ;

le calcul, à l'aide des patchs décalés, d'une valeur de remise à l'échelle par canal et une valeur de polarisation par canal ;

l'application des valeurs de remise à l'échelle et de polarisation calculées aux canaux des patchs décalés ; et

le fait de saisir les patchs décalés, après avoir appliqué les valeurs de remise à l'échelle et de polarisation aux canaux et en mélangeant davantage les canaux à l'aide d'une projection des patchs décalés, dans un module de classification du modèle ML.

2. Procédé selon la revendication 1, dans lequel le calcul de la valeur de remise à l'échelle par canal comprend l'utilisation d'un module perceptron multicouche du modèle ML.

3. Procédé selon la revendication 1 ou 2, dans lequel le calcul de la valeur de polarisation par canal comprend l'utilisation d'un module de convolution en profondeur du modèle ML.

4. Procédé selon l'une quelconque des revendications 1 à 3, dans lequel l'image reçue est une image unique et le décalage d'un nombre prédéfini de canaux entre des parties de l'image comprend le décalage d'un nombre prédéfini de canaux à travers une première dimension et une deuxième dimension.

5. Procédé selon la revendication 4, dans lequel le décalage comprend le décalage d'un nombre prédéfini de canaux entre les patchs adjacents de l'image.

6. Procédé selon l'une quelconque des revendications 1 à 3, dans lequel la réception d'une image comprend la réception d'une pluralité de trames d'une vidéo, et dans lequel le décalage d'un nombre prédéfini de canaux entre des patchs de l'image comprend le décalage d'un nombre prédéfini de canaux à travers une première dimension, une deuxième dimension et une troisième dimension.

7. Procédé selon la revendication 6, dans lequel le décalage est appliqué uniformément dans chacune des première, deuxième et troisième dimensions.

8. Procédé selon la revendication 6 ou 7, dans lequel, pour chaque trame de la pluralité de trames, le décalage comprend le décalage d'un nombre prédéfini de canaux à travers la première dimension et la deuxième dimension entre des patchs dans la trame, et le décalage d'un nombre prédéfini de canaux à travers la troisième dimension entre des patchs de trames adjacentes.

9. Procédé selon l'une quelconque des revendications 1 à 8, dans lequel le décalage d'un nombre prédéfini de canaux entre des patchs comprend le décalage d'un nombre prédéfini de canaux entre des patchs non adjacents.

10. Procédé selon l'une quelconque des revendications 1 à 8, dans lequel le décalage d'un nombre prédéfini de canaux entre des patchs comprend le décalage d'un nombre prédéfini de canaux entre des patchs adjacents.

11. Procédé selon une quelconque revendication précédente, dans lequel le fait de saisir les patchs décalés dans un module de classification comprend :

l'agrégation de prédictions de caractéristiques de chaque zone décalée de l'image reçue pour obtenir une prédiction de caractéristique agrégée ; et
le fait de saisir la prédiction de caractéristique agrégée dans le classificateur.

12. Procédé selon une quelconque revendication précédente, dans lequel le décalage d'un nombre prédéfini comprend le décalage jusqu'à la moitié d'un nombre total de canaux pour chaque patch.

13. Support de stockage lisible par ordinateur comprenant des instructions qui, lorsqu'elles sont exécutées par un processeur, amènent le processeur à exécuter le procédé selon l'une quelconque des revendications 1 à 12.

14. Appareil (100) permettant d'effectuer une reconnaissance d'image ou de vidéo à l'aide d'un modèle d'apprentissage automatique, ML, basé sur un transformateur (106), l'appareil comprenant :
au moins un processeur (102) couplé à une mémoire (104) et agencé pour :

la réception d'une image représentant au moins une caractéristique à identifier, l'image comprenant une pluralité de canaux ;
la division de l'image reçue en une pluralité de patchs ;
le mélange des canaux en utilisant une projection de la pluralité de patchs ;
le décalage d'un nombre prédéfini de canaux entre les patchs pour générer des patchs décalés ;
le calcul, à l'aide des patchs décalés, d'une valeur de remise à l'échelle par canal et une valeur de polarisation par canal ;
l'application des valeurs de remise à l'échelle et de polarisation calculées aux canaux des patchs décalés ; et
le fait de saisir les patchs décalés, après avoir appliqué les valeurs de remise à l'échelle et de polarisation aux canaux et en mélangeant davantage les canaux à l'aide d'une projection des patchs décalés, dans un module de classification du modèle ML.

15. Appareil (100) selon la revendication 14, dans lequel l'au moins un processeur est en outre agencé pour : identifier, à l'aide d'un résultat du module classificateur, un ou plusieurs d'actions, de gestes ou d'objets dans l'image reçue.

FIGURE 1

| Block variant | Top-1% |
|---|---|
| (R1) ours - w/o scale & w/o bias | 79.4 |
| (R2) ours - w/o scale | 80.7 |
| (R3) ours - w/o bias | 80.9 |
| (R4) ours | **81.8** |
| (R5) ours + extra shift | 81.7 |
| (R6) only shift | 79.0 |

FIGURE 2

| Stage | Output Size | VAST-Tiny | | VAST-Small | | VAST-Medium | |
|---|---|---|---|---|---|---|---|
| I | $\frac{H}{4} \times \frac{W}{4}$ | $C_1 = 64$ | | | | | |
| | | $E_1 = 8$ | $\times 3$ | $E_1 = 8$ | $\times 3$ | $E_1 = 8$ | $\times 3$ |
| II | $\frac{H}{8} \times \frac{W}{8}$ | $C_2 = 128$ | | | | | |
| | | $E_2 = 8$ | $\times 4$ | $E_2 = 8$ | $\times 4$ | $E_2 = 8$ | $\times 8$ |
| III | $\frac{H}{16} \times \frac{W}{16}$ | $C_3 = 320$ | | | | | |
| | | $E_3 = 4$ | $\times 8$ | $E_3 = 4$ | $\times 22$ | $E_3 = 4$ | $\times 33$ |
| IV | $\frac{H}{32} \times \frac{W}{32}$ | $C_4 = 512$ | | | | | |
| | | $E_4 = 4$ | $\times 3$ | $E_4 = 4$ | $\times 3$ | $E_4 = 4$ | $\times 3$ |

FIGURE 3

| | 0% | 25% | 33% | 50% |
|---|---|---|---|---|
| % channels shift | 60.2 | 81.5 | 81.8 | 81.7 |

FIGURE 6

## Image or video recognition

Receive an image depicting at least one feature to be identified, the image comprising a plurality of channels S100

Dividing the received image into patches S102

Shift a predefined number of channels between patches to generate shifted patches S104

Compute a channel-wise rescaling value and a channel-wise bias value S106

Apply rescaling and bias values to channels of the generated shifted patches S108

Input shifted patches after applying the rescaling and bias values into a classifier module S110

FIGURE 4

Apparatus 100

Processor(s) 102

Memory 104

ML Model 106

Storage 108

Videos 110

Image Capture Device 112

Display 114

FIGURE 5

User query

e.g.: Hey Bixby, find videos on my gallery where my dog is jumping

Video gallery

Retrieved videos

Show on gallery?

Long video

Short video (highlight)

FIGURE 7

XViT

XViT

Understand what is happening **in real time** so an AI instructor can act on it/react to it

## Provide assistance
- e.g. are you doing the exercise right?

## Keep statistics
- e.g. how many pull-ups? Did you finish your routine or missed something?

## React to user states
- e.g. is the user struggling with the workout routine?

FIGURE 8

EP 4 239 590 B1

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GUANGTING WANG et al.** When Shift Operation Meets Vision Transformer: An Extremely Simple Alternative to Attention Mechanism. *ARXIV.ORG, CORNELL UNIVERSITY LIBRARY, 201 OLIN LIBRARY CORNELL UNIVERSITY ITHACA, NY 14853,* 26 January 2022
- **TAN YU et al.** S2-MLPv2: Improved Spatial-Shift MLP Architecture for Vision. *ARXIV.ORG, CORNELL UNIVERSITY LIBRARY, 201 OLIN LIBRARY CORNELL UNIVERSITY ITHACA,* 02 August 2021
- TSM: Temporal Shift Module for Efficient Video Understanding. **LIN JI et al.** 2019 IEEE/CVF INTERNATIONAL CONFERENCE ON COMPUTER VISION (ICCV). IEEE, 27 October 2019, 7082-7092
- Shift: A Zero FLOP, Zero Parameter Alternative to Spatial Convolutions. **WU BICHEN et al.** 2018 IEEE/CVF CONFERENCE ON COMPUTER VISION AND PATTERN RECOGNITION. IEEE, 18 June 2018, 9127-9135
- **ALEXEY DOSOVITSKIY ; LUCAS BEYER ; ALEXANDER KOLESNIKOV ; DIRKWEISSENBORN ; XIAOHUA ZHAI ; THOMAS UNTERTHINER ; MOSTAFA DEHGHANI ; MATTHIAS MINDERER ; GEORG HEIGOLD ; SYLVAIN GELLY et al.** An image is worth 16x16 words: Transformers for image recognition at scale. *arXiv:2010.11929,* 2020
- **ASHISH VASWANI ; NOAM SHAZEER ; NIKI PARMAR ; JAKOB USZKOREIT ; LLION JONES ; AIDAN N GOMEZ ; LUKASZ KAISER ; ILLIA POLOSUKHIN.** Attention is all you need. *arXiv:1706.03762,* 2017
- **ADRIAN BULAT ; JUAN MANUEL ; PEREZ RUA ; SWATHIKIRAN SUDHAKARAN ; BRAIS MARTINEZ ; GEORGIOS TZIMIROPOULOS.** Space-time mixing attention for video transformer. *NeurIPS,* 2021
- **JIA DENG ; WEI DONG ; RICHARD SOCHER ; LI-JIA LI ; KAI LI ; LI FEI-FEI.** Imagenet: A large-scale hierarchical image database. *CVPR,* 2009
- **WILL KAY ; JOAO CARREIRA ; KAREN SIMONYAN ; BRIAN ZHANG ; CHLOE HILLIER ; SUDHEENDRA VIJAYANARASIMHAN ; FABIO VIOLA ; TIM GREEN ; TREVOR BACK ; PAUL NATSEV et al.** The kinetics human action video dataset. *arXiv:1705.06950,* 2017

- **RAGHAV GOYAL ; SAMIRA EBRAHIMI KAHOU ; VINCENT MICHALSKI ; JOANNA MATERZYNSKA ; SUSANNE WESTPHAL ; HEUNA KIM ; VALENTIN HAENEL ; INGO FRUEND ; PETER YIANILOS ; MORITZ MUELLER-FREITAG et al.** The "something something" video database for learning and evaluating visual common sense. *ICCV,* 2017
- **FAN ; HAOQI FAN ; BO XIONG ; KARTTIKEYA MANGALAM ; YANGHAO LI ; ZHICHENG YAN ; JITENDRA MALIK ; CHRISTOPH FEICHTENHOFER et al.** Multiscale vision transformers. *arXiv:2104.11227,* 2021
- **ADAM PASZKE ; SAM GROSS ; FRANCISCO MASSA ; ADAM LERER ; JAMES BRADBURY ; GREGORY CHANAN ; TREVOR KILLEEN ; ZEMING LIN ; NATALIA GIMELSHEIN ; LUCA ANTIGA et al.** Pytorch: An imperative style, high performance deep learning library. *arXiv:1912.01703,* 2019
- **LOSHCHILOV et al.** Ilya Loshchilov and Frank Hutter. Sgdr: Stochastic gradient descent with warm restarts. *arXiv:1608.03983,* 2016
- **CUBUK ; EKIN D CUBUK ; BARRET ZOPH ; JONATHON SHLENS ; QUOC V LE et al.** Randaugment: Practical automated data augmentation with a reduced search space. *Proceedings of the IEEE/CVF Conference on Computer Vision and Pattern Recognition Workshops,* 2020, 702-703
- **HONGYI ZHANG ; MOUSTAPHA CISSE ; YANN N DAUPHIN ; DAVID LOPEZ-PAZ.** mixup: Beyond empirical risk minimization. *ICLR,* 2018
- **SANGDOO YUN ; DONGYOON HAN ; SEONG JOON OH ; SANGHYUK CHUN ; JUNSUK CHOE ; YOUNGJOON YOO.** Cutmix: Regularization strategy to train strong classifiers with localizable features. *Proceedings of the IEEE/CVF international conference on computer vision,* 2019, 6023-6032
- **ZHUN ZHONG ; LIANG ZHENG ; GUOLIANG KANG ; SHAOZI LI ; YI YANG.** Random erasing data augmentation. *AAAI,* 2020
- **ADAM PASZKE ; SAM GROSS ; FRANCISCO MASSA ; ADAM LERER ; JAMES BRADBURY ; GREGORY CHANAN ; TREVOR KILLEEN ; ZEMING LIN ; NATALIA GIMELSHEIN ; LUCA ANTIGA et al.** Pytorch: An imperative style, high performance deep learning library. *arXiv:1912.01703,* 2019

- **ADRIAN BULAT ; JUAN MANUEL PEREZ RUA ; SWATHIKIRAN SUDHAKARAN ; BRAIS MARTINEZ ; GEORGIOS TZIMIROPOULOS.** Space-time mixing attention for video transformer. *NeurIPS,* 2021

- **CHRISTIAN SZEGEDY ; VINCENT VANHOUCKE ; SERGEY LOFFE ; JON SHLENS ; ZBIGNIEW WOJNA.** Rethinking the inception architecture for computer vision. *CVPR,* 2016